# EUROPEAN PATENT SPECIFICATION

(11) **EP 3 176 728 B1**
(45) Date of publication and mention of the grant of the patent: **01.09.2021**
(21) Application number: 16201551.5
(22) Date of filing: 30.11.2016
(51) Int. Cl.: G06K 9/00, G02F 1/1333, H05B 47/115

(54) **LIQUID CRYSTAL DISPLAY ASSEMBLY AND ELECTRONIC DEVICE**
FLÜSSIGKRISTALLANZEIGEANORDNUNG UND ELEKTRONISCHE VORRICHTUNG
ENSEMBLE D'AFFICHAGE À CRISTAUX LIQUIDES ET DISPOSITIF ÉLECTRONIQUE

(30) Priority: 02.12.2015 CN 201510872857
(43) Date of publication of application: 07.06.2017
(73) Proprietor: Xiaomi Inc., Beijing 100085 (CN)
(72) Inventor: LI, Guosheng, Beijing, Beijing 100085 (CN); JIANG, Zhongsheng, Beijing, Beijing 100085 (CN); PAN, Shuangquan, Beijing, Beijing 100085 (CN)
(74) Representative: dompatent von Kreisler Selting Werner - Partnerschaft von Patent- und Rechtsanwälten mbB

(56) References cited:
- US-A1- 2004 252 867
- US-A1- 2013 201 134
- US-A1- 2014 354 596
- US-A1- 2014 354 597

## Description

### TECHNICAL FIELD

The present invention is related to the field of display technology, and more particularly, to a liquid crystal display assembly and an electronic device.

### BACKGROUND

An electronic device is provided with an optical proximity sensor to detect whether there is an object approaching the electronic device.

In the related arts, a small aperture is opened on a front surface of a housing of an electronic device and near the upper edge of the housing, and an optical proximity sensor is provided in the aperture. Taking a handset as an example, typically, a small aperture is opened on a side of a housing where the screen of the handset is provided, and an optical proximity sensor is provided in the small aperture.

US 2014/0354597 describes a multifunctional pixel including a display pixel, a photoelectric sensor and a second sensor, wherein the second sensor may include an ultrasonic sensor or an infrared sensor. Thereby, the display pixel, the photoelectric sensor and the second sensor are located in the multifunctional pixel.

US 2004/0252867 describes a fingerprint sensor comprising an optical detector to capture light selectively reflected by the relief features of the fingerprint surface.

US 2014/0354596 describes a display module which comprises pixels. Thereby an ultrasonic fingerprint or biometric sensing element is integrated into the display.

US 2013/0201134 describes a touch screen monitor having a display and an ultrasonic device. The ultrasonic device includes a sensor array to detect the surface topology of a biological or other object that is in contact with the surface of the display.

### SUMMARY

The present invention provides a liquid crystal display assembly as defined in independent claim 1 and an electronic device as defined in independent claim 10 to solve the problems in the related arts.

The technical solutions according to the embodiments of this invention may have the following advantageous effects.

By arranging the supersonic wave sensor between the upper and lower polarizers to detect whether there is an object approaching the electronic device, this invention solves the problem of the unpleasant appearance of the electronic device in the related arts caused by opening an aperture for arranging therein an optical proximity sensor to detect whether there is an object approaching an electronic device, and achieves the effects of eliminating the need for opening an aperture, saving the area of the front panel of the electronic device, and improving the design beauty of the electronic device. Further, by avoiding an opening of the aperture in the housing of the electronic device ingress of dust and humidity into the electronic device can be reduced.

In addition, by arranging at least one transmitting terminal of the supersonic wave sensor on at least one of the first and second black matrixes and arranging at least one receiving terminal of the supersonic wave sensor on at least one of the first and second black matrixes, it is ensured that the supersonic wave sensor will not affect the optical transmittance of the LCD panel and thus the display effect of the LCD panel. In addition, this prevents the reception by the supersonic wave sensor of reflected signals of supersonic wave signals transmitted by the transmitting terminal from being constrained by transmitting and receiving angles, thereby solving the problem that an optical proximity sensor cannot detect an approaching object within the whole LCD panel of the electronic device and achieving the effect of improving the detection accuracy.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic structural diagram showing a liquid crystal display assembly according to an exemplary embodiment;
Fig. 2 is a schematic structural diagram showing a liquid crystal display assembly according to another exemplary embodiment;
Fig. 3 is a schematic diagram showing different arrangements of pixel color blocks in a CF according to an exemplary embodiment;
Fig. 4 is a side view of a CF according to an exemplary embodiment;
Fig. 5A is a side view of a lower glass substrate according to an exemplary embodiment;
Fig. 5B is a side view of a lower glass substrate according to another exemplary embodiment;
Fig. 5C is a side view of a lower glass substrate according to another exemplary embodiment; and
Fig. 6 is a schematic diagram showing a display region corresponding to a liquid crystal display assembly according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise indicated. The implementations set forth in the following description of embodiments do not represent all implementations consistent with the invention. Instead, they are merely examples of apparatuses and methods consistent with aspects related to the invention as recited in the appended claims.

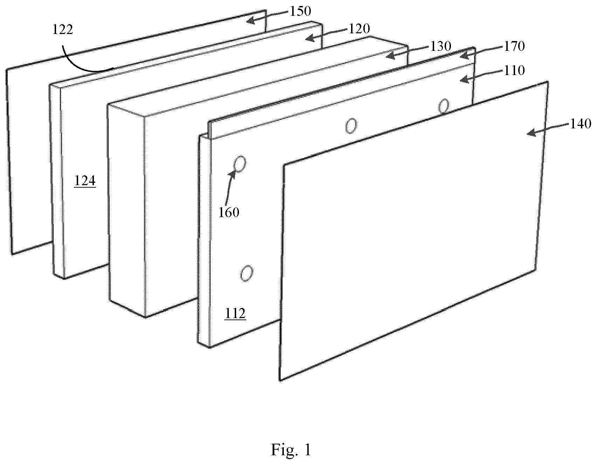

Fig. 1 is a schematic structural diagram showing a liquid crystal display assembly according to an exemplary embodiment. As shown in Fig. 1, the liquid crystal display assembly comprises: an upper substrate 110; a lower substrate 120 disposed parallel to the upper substrate 110; a liquid crystal layer 130 enclosed between the upper and lower substrates 110 and 120; an upper polarizer 140 attached to a side of the upper substrate 110 not adjacent to the liquid crystal layer 130; and a lower polarizer 150 attached to a side of the lower substrate 120 not adjacent to the liquid crystal layer 130.

As shown in Fig. 1, the liquid crystal display assembly further comprises: at least one supersonic wave sensor 160 and a control chip 170. The at least one supersonic wave sensor 160 is arranged between the upper and lower polarizers 140 and 150, and each supersonic wave sensor 160 is electrically connected to the control chip 170.

To sum up, by arranging the supersonic wave sensor between the upper and lower polarizers to detect whether there is an object approaching an electronic device, the liquid crystal display assembly of this invention solves the problem of the unpleasant appearance of the electronic device in the related arts caused by opening an aperture for arranging therein an optical proximity sensor to detect whether there is an object approaching an electronic device, and achieves the effects of eliminating the need for opening an aperture, saving the area of the front panel of the electronic device, and improving the design beauty of the electronic device. Further, by avoiding an opening of the aperture in the housing of the electronic device ingress of dust and humidity into the electronic device can be reduced.

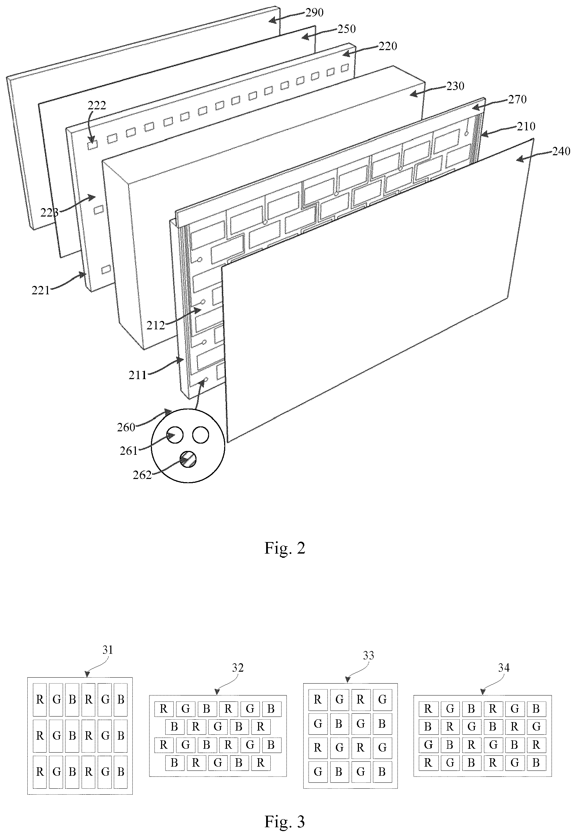

Fig. 2 is a schematic diagram showing a liquid crystal display assembly according to another exemplary embodiment. The liquid crystal display assembly may be a liquid crystal display (LCD) panel of an electronic device, such as a handset, a tablet, a laptop, a smart TV or the like.

As shown in Fig. 2, the liquid crystal display assembly comprises: an upper substrate 210; a lower substrate 220 disposed parallel to the upper substrate 210; a liquid crystal layer 230 enclosed between the upper and lower substrates 210 and 220; an upper polarizer 240 attached to a side of the upper substrate 210 not adjacent to the liquid crystal layer 230; and a lower polarizer 250 attached to a side of the lower substrate 220 not adjacent to the liquid crystal layer 230.

Optionally, as shown in Fig. 2, the upper substrate 210 comprises an upper glass substrate 211 and a CF 212. A lower surface of the upper glass substrate 211 is adjacent to the liquid crystal layer 230. The CF 212 is attached to an upper surface of the upper glass substrate 211. The CF 212 enables a LCD panel to present a color image, and a plurality of different pixel color blocks corresponding to three colors R, G and B are arranged on the CF 212. Fig. 3 exemplarily shows several different arrangements of the pixel color blocks in the CF. In a first possible arrangement, on CF 31 as shown, different pixel color blocks corresponding to three colors R, G and B are arranged in a strip. In a second possible arrangement, on CF32 as shown, different pixel color blocks corresponding to three colors R, G and B are arranged in a triangle. In a third possible arrangement, on CF33 as shown, different pixel color blocks corresponding to three colors R, G and B are arranged in a square. In a fourth possible arrangement, on CF 34 as shown, different pixel color blocks corresponding to three colors R, G and B are arranged are arranged in a mosaic pattern (also referred to as "being diagonally arranged"). Of course, several arrangement manners as shown in Fig. 3 are merely exemplary and explanatory, and there are other possible arrangements not defined in this embodiment.

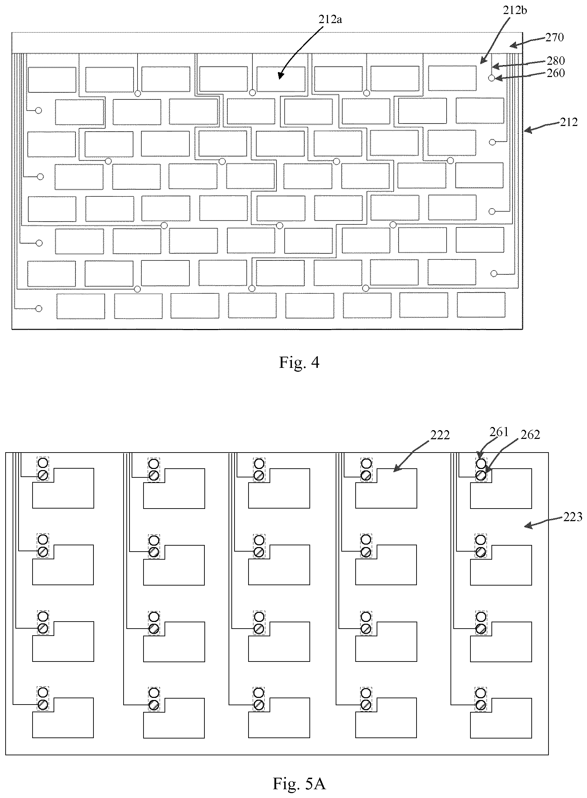

In addition, referring to Fig. 2 and Fig. 4, Fig. 4 shows a side view of the CF 212. The CF 212 comprises pixel color blocks 212a and a first black matrix 212b arranged between the pixel color blocks 212a. The pixel color blocks 212a are different pixel color blocks corresponding to three colors R, G and B. The first black matrix 212b is arranged between the pixel color blocks 212a. The first black matrix 212b is used for preventing leakage of background light, improving display contrast of the LCD panel, preventing color mixing and increasing the purity of colors.

Optionally, as shown in Fig. 2, the lower substrate 220 comprises a lower glass substrate 221 and a TFT array 222. An upper surface of the lower glass substrate 221 is adjacent to the liquid crystal layer 230; and a lower surface of the lower glass substrate 221 is provided with the TFT array 222 and a second black matrix 223 arranged between TFTs of the TFT arrays 222.

Fig. 5A is a side view of the lower glass substrate 221. The second black matrix 223 is used for preventing leakage of background light, improving the display contrast of the LCD panel, preventing color mixing and increasing the purity of colors.

As shown in Fig. 2, the liquid crystal display assembly further comprises: at least one supersonic wave sensor 260 and a control chip 270. Each supersonic wave sensor 260 is arranged between the upper polarizer 240 and a lower polarizer 250 and is electrically connected to the control chip 270. Each supersonic wave sensor 260 is used for converting a supersonic wave signal into an electric signal and providing the electric signal to the control chip 270.

Each supersonic wave sensor 260 comprises at least one transmitting terminal 261 and one receiving terminal 262, or comprises one transmitting terminal 261 and at least one receiving terminal 262. The transmitting terminal 261 and the receiving terminal 262 alternately work under control of the control chip 270. That is, when the transmitting terminal 261 works, the receiving terminal 262 does not work; and when the receiving terminal 262 works, the transmitting terminal 261 does not work. For different supersonic wave sensors 260, the frequency at which the transmitting terminal 261 and the receiving terminal 262 alternately work may be identical or different, which will not be defined in this embodiment.

The transmitting terminal 261 of each supersonic wave sensor 260 is used for transmitting supersonic wave signals. If there is an object approaching, the supersonic wave signals will be blocked by the object to form reflected signals, and the receiving terminal 262 is used for receiving the reflected signals. An electronic device may detect whether there is an object approaching by detecting whether the receiving terminal 262 in the supersonic wave sensor 260 receives reflected signals.

In addition, a timing module may also be arranged in the supersonic wave sensor 260 to detect a distance between an approaching object and the liquid crystal display assembly. The timing module starts timing when the transmitting terminal 261 transmits a supersonic wave signal and stops timing when the receiving terminal 262 receives a reflected signal of the supersonic wave signal, to obtain a timing duration. The supersonic wave sensor 260 reads the timing duration in the timing module and determines the timing duration as a duration t of a transceiving process of the supersonic wave signal.

The distance between the approaching object and the liquid crystal display assembly may be obtained according to a formula: s=v*t/2,

Here, v denotes a sound velocity, t denotes the duration of said transceiving process, and s denotes the distance between the approaching object and the liquid crystal display assembly.

Because the sound velocity v will change with the temperature, a temperature sensor may be arranged in the supersonic wave sensor. The value of the sound velocity under the current temperature may be obtained according to a formula: v=331.45+0.607T, wherein T denotes a current temperature value obtained by the temperature sensor. Optionally, the current temperature value T may also be obtained by reading weather information in the electronic device, which will not be defined in this embodiment.

In the following, arrangements of the supersonic wave sensors 260 will be described.

For example, each supersonic wave sensor 260 may be arranged on the upper surface of the lower glass substrate 221, and in this case both the transmitting terminal 261 and the receiving terminal 262 of each supersonic wave sensor 260 are arranged on the upper surface of the lower glass substrate 221; as another example, each supersonic wave sensor 260 may be arranged on the CF 212, and in this case both the transmitting terminal 261 and the receiving terminal 262 of each supersonic wave sensor 260 are arranged on the CF 212; and so on.

In a first configuration, when there are provided a plurality of supersonic wave sensors 260 (for example, the number of the at least one supersonic wave sensor is n, n≥2), the n supersonic wave sensors are evenly and dispersedly arranged. The transmitting terminal 261 of each supersonic wave sensor 260 is arranged on at least one of the first black matrix 212b and the second black matrix 223, and the receiving terminal 262 of each supersonic wave sensor 260 is arranged on at least one of the first black matrix 212b and the second black matrix 223.

For example, in Fig. 5A, a blank circle represents a transmitting terminal 261 in a supersonic wave sensor 260, a hatched circle represents a receiving terminal 262 in a supersonic wave sensor 260, and both the transmitting terminals 261 and the receiving terminals 262 of supersonic wave sensors 260 are evenly and dispersedly arranged on the second black matrix 223 of the lower glass substrate 221. In Fig. 5A, an example in which one supersonic sensor 260 comprises one transmitting terminal 261 and one receiving terminal 262 is taken for illustration.

In accordance to the present invention, all transmitting terminals 261 of the supersonic wave sensors 260 are dispersedly arranged on the first black matrix 212b, and all receiving terminals 262 thereof are dispersedly arranged on the second black matrix 223; or all the transmitting terminals 261 of the supersonic wave sensors 260 are dispersedly arranged on the second black matrix 223, and all the receiving terminals 262 thereof are dispersedly arranged on the first black matrix 212b.

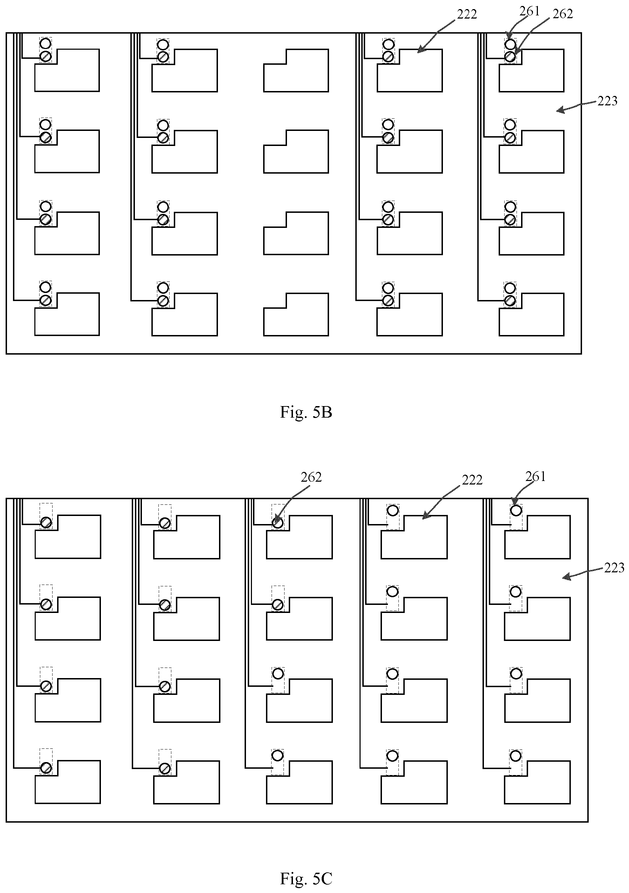

Fig. 5B illustrates another example in which all transmitting terminals 261 and receiving terminals 262 of a part of supersonic wave sensors 260 are dispersedly arranged on the first black matrix 212b, and all transmitting terminals 261 and the receiving terminals 262 of the remaining part of the supersonic wave sensors 260 are dispersedly arranged on the second black matrix 223.

Fig. 5C illustrates another example in which all transmitting terminals 261 of a part of supersonic wave sensors 260 are dispersedly arranged on the first black matrix 212b, and all receiving terminals 262 thereof are dispersedly arranged on the second black matrix 223; and all transmitting terminals 261 of the remaining part of supersonic wave sensors 260 are dispersedly arranged on the second black matrix 223, and all receiving terminals 262 thereof are dispersedly arranged on the first black matrix 212b.

The arrangement of the transmitting terminals 261 and the receiving terminals 262 of the supersonic wave sensors 260 is not limited by this embodiment.

By providing and evenly and dispersedly arranging the plurality of supersonic wave sensors 260, it can be detected within the whole LCD panel of the electronic device whether there is an object approaching, solving the problem of the unpleasant appearance of the electronic device in the related arts caused by opening an aperture for arranging therein an optical proximity sensor to detect whether there is an object approaching an electronic device, and achieving the effects of eliminating the need for opening an aperture, saving the area of the front panel of the electronic device and improving the design beauty of the electronic device. Further, by avoiding an opening of the aperture in the housing of the electronic device ingress of dust and humidty into the electronic device can be reduced.

In addition, by arranging the transmitting terminal 261 and the receiving terminal 262 of each supersonic wave sensor 260 on the second black matrix 223 or the first black matrix 212b, it can be ensured that the supersonic wave sensor 260 will not affect the optical transmittance of the LCD panel and thus the display effect of the LCD panel. In addition, this prevents the reception by the supersonic wave sensor of reflected signals of supersonic wave signals transmitted by the transmitting terminal from being constrained by transmitting and receiving angles, thereby improving the detection accuracy.

Optionally, referring to Fig. 4, each supersonic wave sensor 260 and the control chip 270 are connected via a conducting wire 280, and each conducting wire 280 is also arranged on the first black matrix 212b of the CF 212 or on the second black matrix 223 of the lower glass substrate 221. By arranging the conducting wire 280 on the first black matrix 212b or the second black matrix 223, it can be ensured that the conducting wire will not affect the optical transmittance of the LCD panel and thus the display effect of the LCD panel. Optionally, the conducting wire 208 may also be made of a transparent material.

As shown in Fig. 2, the liquid crystal display assembly further comprises: at least one backlight source 290 electrically connected to the control chip 270. The backlight source 290 is provided at the back of the lower polarizer 250. The backlight source 290 is used for providing a light source at the back of the LCD panel. The type of the backlight source 290 includes, but is not limited to, any one of EL (Electro Luminescent), CCFL (Cold Cathode Fluorescent Lamp), LED (Light Emitting Diode), etc.

In addition, the control chip 270 may be an MCU (Microcontroller Unit) which is also referred to as a single-chip microcomputer or a single chip and is a chip-level computer. In one possible implementation, taking an example in which the MCU dynamically controls the backlight luminance according to a distance between a finger and the liquid crystal display assembly calculated by the supersonic wave sensors, the receiving terminal 262 of each supersonic wave sensor 260 collects reflected signals of supersonic wave signals transmitted from the transmitting terminal 261 of the supersonic wave sensor 260. The MCU acquires reflected signals from each supersonic wave sensor 260, performs calculation on the acquired reflected signals, determines whether there is an object approaching within a present distance from the LCD panel according to the calculation result, and then controls the backlight source 290 to emit light or not to emit light according to the determination result. For example, when the calculation result indicates that there is an object approaching within 1cm from the LCD panel, the MCU controls the backlight source 290 not to emit light; and when the calculation result indicates that there is no object approaching within 1cm from the LCD panel, the MCU controls the backlight source 290 to emit light.

Optionally, the preset distance may not be set in the liquid crystal display assembly, that is, it is considered that there is an object approaching as long as the MCU receives reflected signals from the receiving terminal 262 of the supersonic wave sensor 260.

In addition, a display area corresponding to the liquid crystal display assembly may be a complete display area which is correspondingly provided with at least one backlight source 290. Each backlight source 290 is used for controlling the backlight luminance of the whole display area.

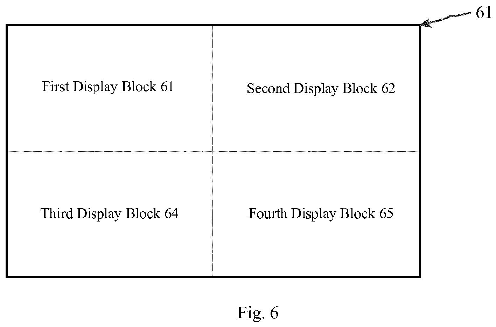

Alternatively, as shown in Fig. 6, the display area 61 corresponding to the liquid crystal display assembly is divided into m (m≥2) display blocks (including a first display block 62, a second display block 63, a third display block 64 and a fourth display block 65 as shown). Each display block is correspondingly provided with at least one backlight source 290 and at least one supersonic wave sensor 260. For each display block, a number of backlight sources 290 corresponding thereto are used for solely controlling the backlight luminance of the display block. For example, assuming that the first display block 62 is correspondingly provided with a first backlight source and a first supersonic wave sensor and that the second display block 63 is correspondingly provided with a second backlight source and a second supersonic wave sensor, then the first backlight source is used for solely controlling the backlight luminance of the first display block 62 according to reflected signals collected by the first supersonic wave sensor, and the second backlight source is used for solely controlling the backlight luminance of the second display block 63 according to reflected signals collected by the receiving terminal of the second supersonic wave sensor. By dividing the display area corresponding to the LCD panel into a plurality of display blocks and separately controlling backlight luminances of the plurality of display blocks by using different backlight sources, flexibility of backlight control is improved.

To sum up, by arranging the supersonic wave sensor between the upper and lower polarizers to detect whether there is an object approaching an electronic device, the liquid crystal display assembly of this invention solves the problem of the unpleasant appearance of the electronic device in the related arts caused by opening an aperture for arranging therein an optical proximity sensor to detect whether there is an object approaching an electronic device, and achieves the effects of eliminating the need for opening an aperture, saving the area of the front panel of the electronic device, and improving the design beauty of the electronic device. Further, by avoiding an opening of the aperture in the housing of the electronic device ingress of dust and humidity into the electronic device can be reduced.

In addition, by arranging at least one transmitting terminal of the supersonic wave sensor on at least one of the first and second black matrixes and arranging at least one receiving terminal of the supersonic wave sensor on at least one of the first and second black matrixes, it is ensured that the supersonic wave sensor will not affect the optical transmittance of the LCD panel and thus the display effect of the LCD panel. In addition, this prevents the reception by the supersonic wave sensor at its receiving terminal of reflected signals of supersonic wave signals transmitted by the transmitting terminal from being constrained by transmitting and receiving angles, thereby solving the problem that an optical proximity sensor cannot detect an approaching object within the whole LCD panel of the electronic device and achieving the effect of improving the detection accuracy.

Another embodiment of this invention provides an electronic device. For example, the electronic device may be a mobile phone, a computer, a digital broadcast terminal, a messaging device, a gaming console, a tablet, a medical device, exercise equipment, a personal digital assistant or the like. The electronic device comprises the liquid crystal display assembly provided by the embodiment shown in Figure 1 or 2.

It is intended that the specification and examples be considered as exemplary only, with a true scope of the invention being indicated by the following claims.

It will be appreciated that the present invention is not limited to the exact construction that has been described above and illustrated in the accompanying drawings. It is intended that the scope of the invention only be limited by the appended claims.

## Claims

1. A liquid crystal display assembly, in particular for an electronic device to detect whether an object is approaching the electronic device, comprising:
an upper substrate (210);
a lower substrate (220) disposed parallel to the upper substrate (210);
a liquid crystal layer (230) enclosed between the upper and lower substrates (220);
an upper polarizer (240) attached to a side of the upper substrate (210) not adjacent to the liquid crystal layer (230);
a lower polarizer (250) attached to a side of the lower substrate (220) not adjacent to the liquid crystal layer (230),
the liquid crystal display assembly further comprising: a plurality of dispersedly arranged supersonic wave sensors (260), a control chip (270), and at least one backlight source (290) electrically connected to the control chip (270) and provided at a side of the lower polarizer (250) not adjacent to the lower substrate (220),
wherein each supersonic wave sensor (260) is arranged between the upper and lower polarizers (150), each supersonic wave sensor (260) is electrically connected to the control chip, and each supersonic wave sensor (260) is used for converting a supersonic wave signal into an electric signal and providing the electric signal to the control chip (270);
wherein the upper substrate (210) comprises an upper glass substrate (211) and a color filter (CF) (212); a lower surface of the upper glass substrate (211) is adjacent to the liquid crystal layer (230); the CF (212) is attached to an upper surface of the upper glass substrate (211);
and the CF (212) comprises pixel color blocks (212a) and a first black matrix (212b) arranged between the pixel color blocks (212a);
wherein the lower substrate (220) comprises a lower glass substrate (221) and a thin film transistor (TFT) array (222); an upper surface of the lower glass substrate (221) is adjacent to the liquid crystal layer (230); and a lower surface of the lower glass substrate (221) is provided with the TFT array (222) and a second black matrix (223) arranged between TFTs of the TFT array (222);
wherein each supersonic wave sensor (260) comprises at least one transmitting terminal (261) and one receiving terminal (262), the transmitting terminals (261) of each supersonic wave sensor (260) are arranged on at least one of the first black matrix (212b) and second black matrix (223) and the receiving terminal (262) of each supersonic wave sensor (260) is arranged on at least one of the first black matrix (212b) and second black matrix (223), and the transmitting and receiving terminals (261; 262) alternately work under the control of the control chip (270);
wherein each supersonic wave sensor (260) and the control chip (270) are connected via a conducting wire (280), and each conducting wire (280) is arranged on the first black matrix (212b) of the CF (212) or on the second black matrix (223) of the lower glass substrate (221);
wherein the receiving terminal (262) of each supersonic wave sensor (260) collects reflected signals of supersonic wave signals transmitted from the transmitting terminal (261) of the supersonic wave sensor (260). The control chip (270) acquires reflected signals from each supersonic wave sensor (260), performs calculation on the acquired reflected signals, determines whether there is an object approaching within a present distance from the liquid crystal display assembly according to the calculation result.

2. The liquid crystal display assembly of claim 1, wherein both the transmitting terminals (261) and the receiving terminals (262) of supersonic wave sensors (260) are arranged on the second black matrix (223), wherein preferably one supersonic sensor (260) comprises one transmitting terminal (261) and one receiving terminal (262).

3. The liquid crystal display assembly of claim 1, wherein all transmitting terminals (261) of the supersonic wave sensors (260) are dispersedly arranged on the first black matrix (212b), and all receiving terminals (262) thereof are dispersedly arranged on the second black matrix (223).

4. The liquid crystal display assembly of claim 1, wherein all the transmitting terminals (261) of the supersonic wave sensors (260) are dispersedly arranged on the second black matrix (223), and all the receiving terminals (262) thereof are dispersedly arranged on the first black matrix (212b).

5. The liquid crystal display assembly of claim 1, wherein all transmitting terminals (261) and receiving terminals (262) of a part of supersonic wave sensors (260) are dispersedly arranged on the first black matrix (212b), and all transmitting terminals (261) and the receiving terminals (262) of the remaining part of the supersonic wave sensors (260) are dispersedly arranged on the second black matrix (223).

6. The liquid crystal display assembly of claim 1, wherein all transmitting terminals (261) of a part of supersonic wave sensors (260) are dispersedly arranged on the first black matrix (212b), and all receiving terminals (262) thereof are dispersedly arranged on the second black matrix (223); and all transmitting terminals (261) of the remaining part of supersonic wave sensors (260) are dispersedly arranged on the second black matrix (223), and all receiving terminals (262) thereof are dispersedly arranged on the first black matrix (212b).

7. The liquid crystal display assembly of claim 1, wherein a display region (61) of the liquid crystal display assembly is divided into m display blocks, each display block is correspondingly provided with at least one backlight source (290) and at least one supersonic wave sensor (260), and m≥2.

8. An electronic device comprising a liquid crystal display assembly according to any of claims 1-7.

## Patentansprüche

1. Flüssigkristallanzeigeanordnung, insbesondere für eine elektronische Vorrichtung zum Detektieren, ob sich ein Objekt der elektronischen Vorrichtung nähert, aufweisend:
ein oberes Substrat (210);
ein unteres Substrat (220), das parallel zu dem oberen Substrat (210) angeordnet ist;
eine Flüssigkristallschicht (230), die zwischen dem oberen und dem unteren Substrat (220) eingeschlossen ist;
einen oberen Polarisator (240), der an einer Seite des oberen Substrats (210), die nicht an die Flüssigkristallschicht (230) angrenzt, angebracht ist;
einen unteren Polarisator (250), der an einer Seite des unteren Substrats (220), die nicht an die Flüssigkristallschicht (230) angrenzt, angebracht ist;
wobei die Flüssigkristallanzeigeanordnung ferner aufweist: eine Vielzahl von verteilt angeordneten Ultraschallwellensensoren (260), einen Steuerchip (270) und mindestens eine Hintergrundbeleuchtungsquelle (290), die mit dem Steuerchip (270) elektrisch verbunden ist und an einer Seite des unteren Polarisators (250), die nicht an das untere Substrat (220) angrenzt, vorgesehen ist,
wobei jeder Ultraschallwellensensor (260) zwischen dem oberen und dem unteren Polarisator (150) angeordnet ist, jeder Ultraschallwellensensor (260) mit dem Steuerchip elektrisch verbunden ist und jeder Ultraschallwellensensor (260) zum Umwandeln eines Schallwellensignals in ein elektrisches Signal und Bereitstellen des elektrischen Signals für den Steuerchip (270) verwendet wird;
wobei das obere Substrat (210) ein oberes Glassubstrat (211) und einen Farbfilter (CF) (212) aufweist; eine untere Fläche des oberen Glassubstrats (211) an die Flüssigkristallschicht (230) angrenzt; der CF (212) an einer oberen Fläche des oberen Glassubstrats (211) angebracht ist; und der CF (212) Pixelfarbblöcke (212a) und eine erste schwarze Matrix (212b), die zwischen den Pixelfarbblöcken (212a) angeordnet ist, aufweist;
wobei das untere Substrat (220) ein unteres Glassubstrat (221) und ein Dünnschichttransistor- (TFT) Array (222) aufweist; eine obere Fläche des unteren Glassubstrats (221) an die Flüssigkristallschicht (230) angrenzt; und eine untere Fläche des unteren Glassubstrats (221) mit dem TFT-Array (222) und einer zweiten schwarzen Matrix (223), die zwischen TFTs des TFT-Arrays (222) angeordnet ist, versehen ist;
wobei jeder Ultraschallwellensensor (260) mindestens einen Sendeanschluss (261) und einen Empfangsanschluss (262) aufweist, die Sendeanschlüsse (261) jedes Ultraschallwellensensors (260) auf der ersten schwarzen Matrix (212b) und/oder der zweiten schwarzen Matrix (223) angeordnet sind und der Empfangsanschluss (262) jedes Ultraschallwellensensors (260) auf der ersten schwarzen Matrix (212b) und/oder der zweiten schwarzen Matrix (223) angeordnet ist und die Sende- und Empfangsanschlüsse (261, 262) alternierend unter der Steuerung des Steuerchips (270) arbeiten;
wobei jeder Ultraschallwellensensor (260) und der Steuerchip (270) über einen Leitungsdraht (280) verbunden sind und jeder Leitungsdraht (280) auf der ersten schwarzen Matrix (212b) des CF (212) oder auf der zweiten schwarzen Matrix (223) des unteren Glassubstrats (221) angeordnet ist; wobei der Empfangsanschluss (262) jedes Ultraschallwellensensors (260) Reflexionssignale von Ultraschallwellensignalen, die von dem Sendeanschluss (261) des Ultraschallwellensensors (260) gesendet werden, auffängt; der Steuerchip (270) Reflexionssignale aus jedem Ultraschallwellensensor (260) erfasst, eine Berechnung an den erfassten Reflexionssignalen durchführt, gemäß dem Berechnungsergebnis bestimmt, ob sich ein Objekt innerhalb einer vorliegenden Distanz zu der Flüssigkristallanzeigeanordnung nähert.

2. Flüssigkristallanzeigeanordnung nach Anspruch 1, bei der sowohl die Sendeanschlüsse (261) als auch die Empfangsanschlüsse (262) der Ultraschallwellensensoren (260) auf der zweiten schwarzen Matrix (223) angeordnet sind, wobei vorzugsweise ein Ultraschallwellensensor (260) einen Sendeanschluss (261) und einen Empfangsanschluss (262) aufweist.

3. Flüssigkristallanzeigeanordnung nach Anspruch 1, bei der sämtliche Sendeanschlüsse (261) der Ultraschallwellensensoren (260) auf der ersten schwarzen Matrix (212b) verteilt angeordnet sind und sämtliche Empfangsanschlüsse (262) derselben auf der zweiten schwarzen Matrix (223) verteilt angeordnet sind.

4. Flüssigkristallanzeigeanordnung nach Anspruch 1, bei der sämtliche Sendeanschlüsse (261) der Ultraschallwellensensoren (260) auf der zweiten schwarzen Matrix (223) verteilt angeordnet sind und sämtliche Empfangsanschlüsse (262) derselben auf der ersten schwarzen Matrix (212b) verteilt angeordnet sind.

5. Flüssigkristallanzeigeanordnung nach Anspruch 1, bei der sämtliche Sendeanschlüsse (261) und Empfangsanschlüsse (262) eines Teils der Ultraschallwellensensoren (260) auf der ersten schwarzen Matrix (212b) verteilt angeordnet sind und sämtliche Sendeanschlüsse (261) und die Empfangsanschlüsse (262) des verbliebenen Teils der Ultraschallwellensensoren (260) auf der zweiten schwarzen Matrix (223) verteilt angeordnet sind.

6. Flüssigkristallanzeigeanordnung nach Anspruch 1, bei der sämtliche Sendeanschlüsse (261) eines Teils der Ultraschallwellensensoren (260) auf der ersten schwarzen Matrix (212b) verteilt angeordnet sind und sämtliche Empfangsanschlüsse (262) derselben auf der zweiten schwarzen Matrix (223) verteilt angeordnet sind; und sämtliche Sendeanschlüsse (261) des verbliebenen Teils der Ultraschallwellensensoren (260) auf der zweiten schwarzen Matrix (223) verteilt angeordnet sind und sämtliche Empfangsanschlüsse (262) derselben auf der ersten schwarzen Matrix (212b) verteilt angeordnet sind.

7. Flüssigkristallanzeigeanordnung nach Anspruch 1, bei der eine Anzeigeregion (61) der Flüssigkristallanzeigeanordnung in m Anzeigeblöcke unterteilt ist, jeder Anzeigeblock entsprechend mit mindestens einer Hintergrundbeleuchtungsquelle (290) und mindestens einem Ultraschallwellensensor (260) versehen ist und m≥2 ist.

8. Elektronische Vorrichtung, die eine Flüssigkristallanzeigeanordnung nach einem der Ansprüche 1-7 aufweist.

## Revendications

1. Ensemble afficheur à cristaux liquides, en particulier pour un dispositif électronique destiné à détecter si un objet s'approche du dispositif électronique, comprenant :
un substrat supérieur (210) ;
un substrat inférieur (220) disposé parallèlement au substrat supérieur (210) ;
une couche de cristaux liquides (230) enfermée entre les substrats supérieur et inférieur (220) ;
un polariseur supérieur (240) fixé à un côté du substrat supérieur (210) non adjacent à la couche de cristaux liquides (230) ;
un polariseur inférieur (250) fixé à un côté du substrat inférieur (220) non adjacent à la couche de cristaux liquides (230),
l'ensemble afficheur à cristaux liquides comprenant en outre : une pluralité de capteurs d'ondes supersoniques (260) agencés de manière dispersée, une puce de commande (270) et au moins une source de rétroéclairage (290) connectée électriquement à la puce de commande (270) et fournie sur un côté du polariseur inférieur (250) non adjacent au substrat inférieur (220), chaque capteur d'ondes supersoniques (260) étant agencé entre les polariseurs supérieur et inférieur (150), chaque capteur d'ondes supersoniques (260) étant connecté électriquement à la puce de commande, et chaque capteur d'ondes supersoniques (260) étant utilisé pour convertir un signal d'onde supersonique en un signal électrique et fournir le signal électrique à la puce de commande (270) ;
le substrat supérieur (210) comprenant un substrat en verre supérieur (211) et un filtre de couleur (CF) (212) ; une surface inférieure du substrat en verre supérieur (211) étant adjacente à la couche de cristaux liquides (230) ; le CF (212) étant fixé à une surface supérieure du substrat en verre supérieur (211) ; et le CF (212) comprenant des blocs de couleur de pixels (212a) et une première matrice noire (212b) agencée entre les blocs de couleur de pixels (212a) ;
le substrat inférieur (220) comprenant un substrat en verre inférieur (221) et un réseau de transistors en couches minces (TFT) (222) ; une surface supérieure du substrat en verre inférieur (221) étant adjacente à la couche de cristaux liquides (230) ; et une surface inférieure du substrat en verre inférieur (221) étant fournie avec le réseau de TFT (222) et une seconde matrice noire (223) agencée entre des TFT du réseau de TFT (222) ;
chaque capteur d'ondes supersoniques (260) comprenant au moins un terminal de transmission (261) et un terminal de réception (262), les terminaux de transmission (261) de chaque capteur d'ondes supersoniques (260) étant agencés sur la première matrice noire (212b) et/ou la seconde matrice noire (223) et le terminal de réception (262) de chaque capteur d'ondes supersoniques (260) étant agencé sur la première matrice noire (212b) et/ou la seconde matrice noire (223), et les terminaux de transmission et de réception (261 ; 262) fonctionnant alternativement sous la commande de la puce de commande (270) ;
chaque capteur d'ondes supersoniques (260) et la puce de commande (270) étant connectés par l'intermédiaire d'un fil conducteur (280), et chaque fil conducteur (280) étant agencé sur la première matrice noire (212b) du CF (212) ou sur la seconde matrice noire (223) du substrat en verre inférieur (221) ;
le terminal de réception (262) de chaque capteur d'ondes supersoniques (260) collectant des signaux réfléchis de signaux d'ondes supersoniques transmis depuis le terminal de transmission (261) du capteur d'ondes supersoniques (260). La puce de commande (270) acquiert des signaux réfléchis provenant de chaque capteur d'ondes supersoniques (260), effectue un calcul sur les signaux réfléchis acquis, détermine s'il y a un objet s'approchant à une distance actuelle de l'ensemble afficheur à cristaux liquides selon le résultat du calcul.

2. Ensemble afficheur à cristaux liquides selon la revendication 1, dans lequel les terminaux de transmission (261) et les terminaux de réception (262) de capteurs d'ondes supersoniques (260) sont agencés sur la seconde matrice noire (223), dans lequel de préférence un capteur supersonique (260) comprend un terminal de transmission (261) et un terminal de réception (262).

3. Ensemble afficheur à cristaux liquides selon la revendication 1, dans lequel tous les terminaux de transmission (261) des capteurs d'ondes supersoniques (260) sont agencés de manière dispersée sur la première matrice noire (212b), et tous les terminaux de réception (262) de ceux-ci sont agencés de manière dispersée sur la seconde matrice noire (223).

4. Ensemble afficheur à cristaux liquides selon la revendication 1, dans lequel tous les terminaux de transmission (261) des capteurs d'ondes supersoniques (260) sont agencés de manière dispersée sur la seconde matrice noire (223), et tous les terminaux de réception (262) de ceux-ci sont agencés de manière dispersée sur la première matrice noire (212b).

5. Ensemble afficheur à cristaux liquides selon la revendication 1, dans lequel tous les terminaux de transmission (261) et tous les terminaux de réception (262) d'une partie de capteurs d'ondes supersoniques (260) sont agencés de manière dispersée sur la première matrice noire (212b), et tous les terminaux de transmission (261) et tous les terminaux de réception (262) de la partie restante des capteurs d'ondes supersoniques (260) sont agencés de manière dispersée sur la seconde matrice noire (223).

6. Ensemble afficheur à cristaux liquides selon la revendication 1, dans lequel tous les terminaux de transmission (261) d'une partie de capteurs d'ondes supersoniques (260) sont agencés de manière dispersée sur la première matrice noire (212b), et tous les terminaux de réception (262) de ceux-ci sont agencés de manière dispersée sur la seconde matrice noire (223) ; et tous les terminaux de transmission (261) de la partie restante de capteurs d'ondes supersoniques (260) sont agencés de manière dispersée sur la seconde matrice noire (223), et tous les terminaux de réception (262) de ceux-ci sont agencés de manière dispersée sur la première matrice noire (212b).

7. Ensemble afficheur à cristaux liquides selon la revendication 1, dans lequel une région d'affichage (61) de l'ensemble afficheur à cristaux liquides est divisée en m blocs d'affichage, chaque bloc d'affichage est fourni en conséquence avec au moins une source de rétroéclairage (290) et au moins un capteur d'ondes supersoniques (260), et m ≥ 2.

8. Dispositif électronique comprenant un ensemble afficheur à cristaux liquides selon l'une quelconque des revendications 1 à 7.
